# EUROPEAN PATENT APPLICATION

(11) **EP 4 693 262 A1**
(43) Date of publication of application: **11.02.2026**
(21) Application number: 24918905.1
(22) Date of filing: 05.04.2024
(51) Int. Cl.: G09F 9/30, G09F 21/04, F16H 1/16, F16H 25/20, F16H 19/04, B60K 35/00

(54) **DISPLAY DEVICE FOR VEHICLE**

(30) Priority: 19.01.2024 KR 20240008724
(71) Applicant: LG Electronics Inc., Yeongdeungpo-gu Seoul 07336 (KR)
(72) Inventor: CHOI, Biseok, Seoul 06772 (KR); TAK, Wooseong, Seoul 06772 (KR); KIM, Sangwon, Seoul 06772 (KR); JUNG, Woo, Seoul 06772 (KR); PARK, Chanhoon, Seoul 06772 (KR)
(74) Representative: Vossius & Partner Patentanwälte Rechtsanwälte mbB
(86) International application number: PCT/KR2024/004538
(87) International publication number: WO 2025/154871

(57) **Abstract**

A display device for a vehicle may include a moving frame arranged in a display module; a first link connected to the moving frame by a first hinge; a second link connected to the moving frame by a second hinge; a first driving source moving the first link; a second driving source moving the second link; a guide pin arranged in the moving frame; and a fixed frame having a guide path formed along which the guide pin is guided. The guide path may include a swivel path along which the guide pin is guided around a swivel virtual axis; and a linear path connected to the swivel path and along which the guide pin is linearly guided.

## Description

### [Technical Field]

The present disclosure relates to a display device for a vehicle.

### [Background Art]

The vehicle may be equipped with a display device.

An example of a display device for a vehicle installed in a vehicle may be mounted on a rotating display holder disclosed in Korean Patent Publication No. 10-2023-0147861 A (published on October 24, 2023), and the rotating display holder includes a mounting bracket that is installed on an instrument panel of a vehicle to mount a display device, and when an air bag installed inside the instrument panel is deployed, the rear part thereof is hit by the deployed air bag and rotates forward toward a vehicle interior seat, and prevents the display device from being released from the mounting state thereof; and a rotating support part that is connected to the mounting bracket to rotatably support the mounting bracket with respect to the instrument panel.

### [Disclosure]

### [Technical Problem]

An object of the present embodiment is to provide a display device for a vehicle capable of swiveling the display module to an angle desired by the passenger or linearly moving the display module closer to the passenger.

### [Technical Solution]

A display device for a vehicle according to the present embodiment may comprise a moving frame disposed on a display module; a first link connected to the moving frame by a first hinge; a second link connected to the moving frame by a second hinge; a first driving source moving the first link; a second driving source moving the second link; a guide pin disposed in the moving frame; and a fixed frame having a guide path formed along which the guide pin is guided.

The guide path may comprise a swivel path along which the guide pin is guided around a swivel virtual axis; and a linear path connected to the swivel path and along which the guide pin is linearly guided.

The swivel path may comprise an outer path connected to the linear path and an inner path spaced apart from the outer path at an inner side of the outer path and connected to the linear path.

The swivel path may comprise a first swivel path guiding the guide pin around a first swivel virtual axis, and a second swivel path connected to the first swivel path and guiding the guide pin around a second swivel virtual axis.

The linear path may be connected to a connection path of the first swivel path and the second swivel path.

The swivel path may further comprise a third swivel path guiding the guide pin around a third swivel virtual axis, and a fourth swivel path connected to the third swivel path and guiding the guide pin around a fourth swivel virtual axis.

The linear path may be connected to a connection path of the third swivel path and the fourth swivel path.

One end of the linear path may be connected to the connection path of the first swivel path and the second swivel path, and the other end of the linear path may be connected to a region of the connection path of the third swivel path and the fourth swivel path.

A length of the third swivel path may be shorter than a length of the first swivel path.

A length of the fourth swivel path may be shorter than a length of the second swivel path.

A distance between a rear end of the third guide path and a rear end of the fourth swivel path may be shorter than a distance between a rear end of the first guide path and a rear end of the second swivel path.

The display module may be operated in one of the following modes: a first swivel mode in which the guide pin is guided along the first swivel path; a second swivel mode in which the guide pin is guided along the second swivel path; a telescopic mode in which the guide pin is guided along the linear path; a third swivel mode in which the guide pin is guided along the third swivel path; and a fourth swivel mode in which the guide pin is guided along the fourth swivel path.

In the first swivel mode and the second swivel mode, the display module may be swiveled to be inclined at a first angle.

In the third swivel mode and the fourth swivel mode, the display module may be swiveled to be inclined at a second angle smaller than the first angle.

The second angle may be changed in response to an angle change request signal.

In the third swivel mode and the fourth swivel mode, the display module may be swiveled to be inclined at a third angle greater than the first angle.

The third angle may be changed in response to an angle change request signal.

The first driving source may comprise a first nut to which the first link is rotatably connected; a first screw linearly moving the first nut; and a first rotation mechanism rotating the first screw.

The second driving source may comprise a second nut to which the second link is rotatably connected; a second screw linearly moving the second nut; and a second rotation mechanism rotating the second screw.

The first rotation mechanism and the second rotation mechanism may make a travel distance of the first nut and a travel distance of the second nut the same so that the guide pin is guided along the linear path.

The first rotation mechanism may rotate the first screw in one direction so that the first nut moves toward a passenger, and then rotate the first screw in the other direction opposite to the one direction so that the first nut moves away from the passenger.

The second rotation mechanism may rotate the second screw in one direction so that the second nut moves toward a passenger, and then rotate the second screw in the other direction opposite to the one direction so that the second nut moves away from the passenger.

### [Advantageous Effect]

According to the present embodiment, the display module can be swiveled or linearly moved to an angle desired by the passenger, thereby responding to a wider range of consumer needs.

Additionally, the display module can be linearly moved closer to the user, allowing even riders with short arm lengths to conveniently manipulate the display module.

In addition, the swivel angle of the display module can be changed to a convenient angle for the passenger to manipulate, allowing the passenger to manipulate the display module more conveniently.

Additionally, if the display module has a high light reflection at a certain angle, the display can be swiveled to another angle where the light reflection is not high, thereby improving the visibility of the display module.

### [Description of Drawings]

FIG. 1 is a perspective view illustrating an example of a display device for a vehicle according to the present embodiment;
FIG. 2 is a view illustrating an example of a display device for a vehicle according to the present embodiment;
FIG. 3 is a perspective view illustrating a display module and a moving frame according to the present embodiment;
FIG. 4 is a view illustrating a fixed frame and a plurality of virtual axes according to the present embodiment;
FIG. 5 is a view illustrating when the moving frame illustrated in FIG. 1 is swiveled around the first swivel virtual axis;
FIG. 6 is a view illustrating when the moving frame illustrated in FIG. 1 is swiveled around the second swivel virtual axis;
FIG. 7 is a view illustrating when the moving frame illustrated in FIG. 1 is moved toward the passenger;
FIG. 8 is a view illustrating when the moving frame illustrated in FIG. 1 is moved toward the passenger and then swivels around the third swivel virtual axis;
FIG. 9 is a view illustrating when the moving frame illustrated in FIG. 1 has moved toward the passenger and then swivels around the fourth swivel virtual axis;
FIG. 10 is a view illustrating a process in which a moving frame of another example of a display device for a vehicle according to the present embodiment moves toward a passenger and then swivels to the left; and
FIG. 11 is a view illustrating a process in which a moving frame of another example of a display device for a vehicle according to the present embodiment moves toward a passenger and then swivels to the right.

### [Best Mode]

Hereinafter, specific embodiments of the present disclosure will be described in detail with reference to the drawings.

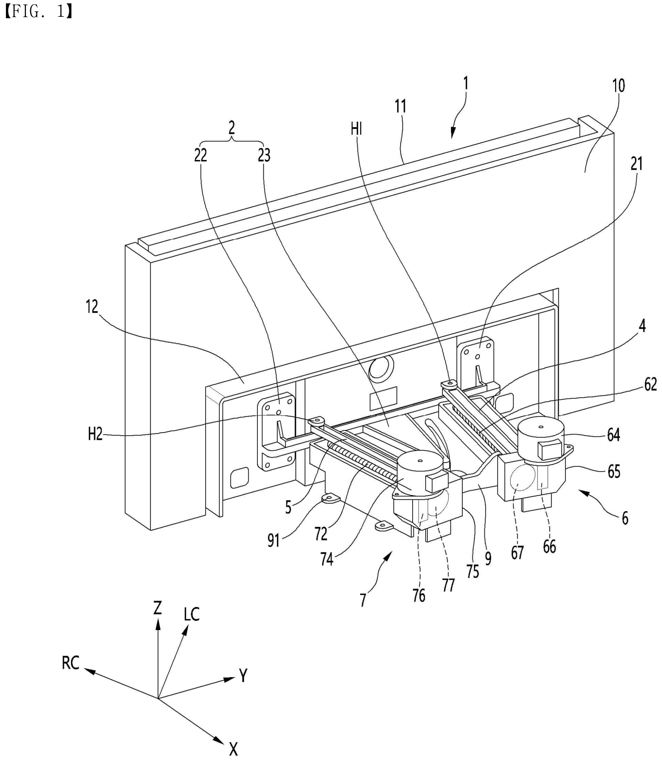

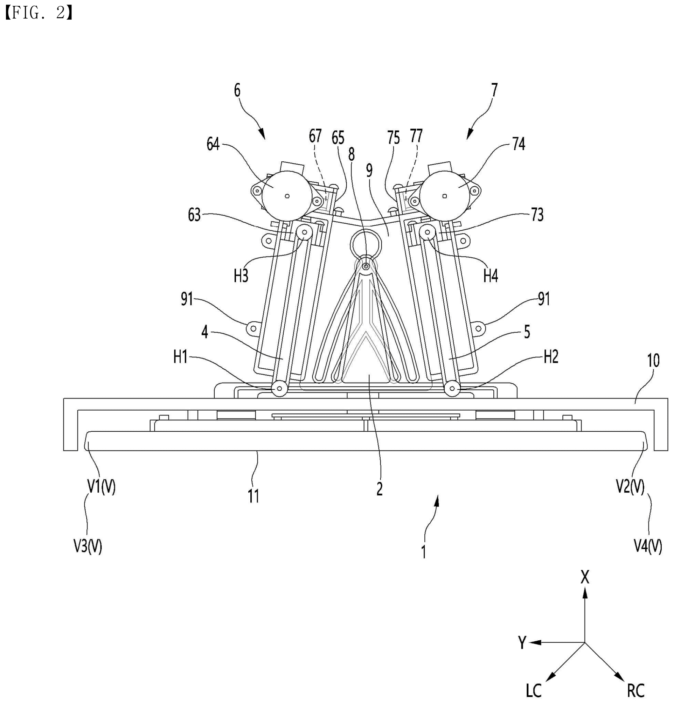

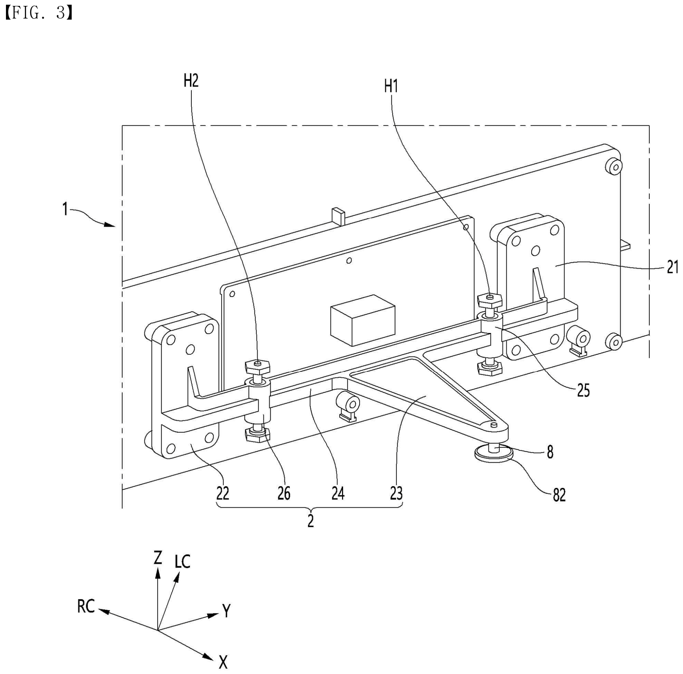

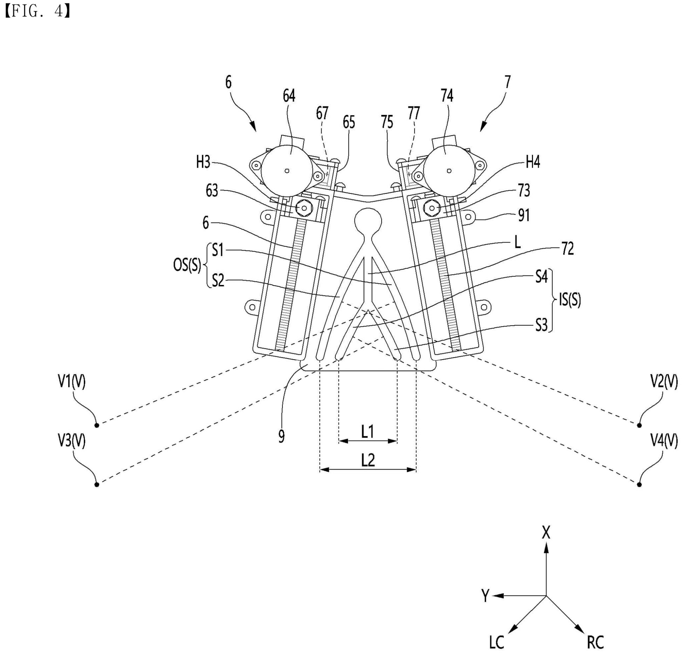

FIG. 1 is a perspective view illustrating an example of a display device for a vehicle according to the present embodiment; FIG. 2 is a view illustrating an example of a display device for a vehicle according to the present embodiment; FIG. 3 is a perspective view illustrating a display module and a moving frame according to the present embodiment; and FIG. 4 is a view illustrating a fixed frame and a plurality of virtual axes according to the present embodiment.

A display device for a vehicle may comprise a moving frame 2 disposed on a display module 1; a first link 4 connected to the moving frame 2 by a first hinge H1; a second link 5 connected to the moving frame 2 by a second hinge H2; a first driving source 6 that moves the first link 4; a second driving source 7 that moves the second link 5; a guide pin 8 disposed in the moving frame 2; and a fixed frame 9 on which the guide pin 8 is guided.

A display device for a vehicle can be installed in the cockpit or instrument panel of a vehicle and can visually provide various information to passengers located in the vehicle.

The display device for a vehicle may be a center display located in the center of a cockpit or instrument panel, or may be a center information display (CID) that provides information to passengers located in the driver's seat or front passenger seat.

The display device for a vehicle may be a driver display located in front of the driver's seat.

The display device for a vehicle may be a passenger display located in front of the passenger seat and may be a passenger information display (PIP) or Co-driver Display (CDD).

The display device for a vehicle can be placed on the hood or backrest of a vehicle, and are not limited to their installation location.

Hereinafter, the display device for a vehicle is described as a display installed in a cockpit or instrument panel of a vehicle, and the direction in which a vehicle moves forward is described as a front direction, and the direction in which a vehicle moves backward is described as a rear direction.

The display module 1 may further comprise an input unit 11 arranged on the rear surface.

The display module 1 may be a rear view display module that has an input unit 11 provided on the rear side and displays an image in a rear direction.

Examples of input units 11 may comprise a touch screen, buttons, or the like that can be manipulated by a user's touch.

The display module 1 can be moved so that the input unit 11 comes closer to the passenger, swivel to be inclined at a predetermined angle so that the input unit 11 faces the left inclined direction LC, or swivel to be inclined at a predetermined angle so that the input unit 11 faces the right inclined direction RC.

The display module 1 can be operated in a telescopic mode in which it moves toward the passenger, a left swing mode in which it swings to be inclined to the left, a right swing mode in which it swings to be inclined to the right, a telescopic left swing mode in which it moves toward the passenger and swings to be inclined to the left, and a telescopic right swing mode in which it moves toward the passenger and swings to be inclined to the right.

The display module 1 can be operated in one of the following modes: the telescopic mode, the left swing mode, the right swing mode, the telescopic left swing mode, and the telescopic right swing mode.

A user input unit, such as a button or voice recognition module that can input the mode of the display module 1 may be placed in a vehicle or a display device for a vehicle, and a passenger may input a telescopic mode, a left swing mode, a right swing mode, a telescopic left swing mode, or a telescopic right swing mode through the user input unit.

A processor disposed in a vehicle or a display device for a vehicle can drive/stop at least one of the first motor 64 of the first driving source 6 and the second motor 74 of the second driving source 7 according to a user's input.

Telescopic mode may be a mode in which the display module 1 does not rotate in a left direction or in a right direction, but only moves in the front and rear direction X toward the vehicle interior.

When the telescopic mode is entered, the display device for a vehicle can drive/stop the first motor 64 of the first driving source 6 and the second motor 74 of the second driving source 7 together.

When the left swing mode or the right swing mode is input, the display device for a vehicle can drive either the first motor 64 of the first driving source 6 or the second motor 74 of the second driving source 7 for a longer period of time or at a higher speed than the other.

When the telescopic left swing mode or the telescopic right swing mode is input, the display device for a vehicle can sequentially perform a process of driving/stopping the first motor 64 of the first driving source 6 and the second motor 74 of the second driving source 7 together, and a process of driving one of the first motor 64 of the first driving source 6 and the second motor 74 of the second driving source 7 for a longer period of time or at a higher speed than the other.

The display module 1 may comprise a mounting bracket 12 arranged on the front surface of the case of the display module 1.

The front surface of the mounting bracket 12 can be opened. The mounting bracket 12 can include a rear plate and a plurality of edges protruding forward from the rear plate, and an accommodation space can be formed in the plurality of edges to accommodate a portion of the moving frame 2.

The moving frame 2 can be placed on the display module 2 and moved together with the display module 2.

The moving frame 2 can be swiveled around a swivel virtual axis V or moved in the front and rear direction X.

The moving frame 2 may comprise, as illustrated in FIG. 3, a fastening bodies 21, 22 fastened to the front surface of the display module 2 with a fastening member such as a screw, a protruding body 23 in which a guide pin 8 is arranged, and a connecting body 24 connecting the fastening bodies 21, 22 and the protruding body 23.

The fastening bodies 21, 22 can be fastened to the case or mounting bracket 12 of the display module 1.

A plurality of fastening bodies 21, 22 may be provided. The fastening bodies 21, 22 may be provided as a pair, and the pair of fastening bodies 21, 22 may include a left fastening body 21 fastened to the left side of the front surface of the display module 1 and a right fastening body 22 fastened to the right side of the front surface of the display module 1.

The protruding body 23 may be a front body formed on the front surface of the connecting body 24.

The protruding body 23 can protrude forward from the center of the front surface of the connecting body 24.

The protruding body 23 can have a pin through-hole formed through which a guide pin 8 passes. The pin through-hole can be formed closer to the leading end among the leading and trailing ends of the protruding body 23.

The pin through-hole can be formed to penetrate the protruding body 23 in the up and down direction Z.

The connecting body 24 can connect the left fastening body 21 and the right fastening body 22. The connecting body 24 can be formed long in the left and right direction Y.

A first hinge supporter 25 that rotatably supports a first hinge H1 and a second hinge supporter 26 that rotatably supports a second hinge H2 may be formed in the moving frame 2.

The first hinge supporter 25 and the second hinge supporter 26 can be formed in the connecting body 24, and the first hinge supporter 25 and the second hinge supporter 26 can be spaced apart from each other in the left and right direction Y.

The first hinge H1 can be arranged long in the up and down direction on the first hinge supporter 25.

The second hinge H2 can be arranged long in the up and down direction on the first hinge supporter 25.

Referring to FIG. 2, the first link 4 can be connected to the first hinge H1 and can rotate around the first hinge H1.

The first link 4 can be rotatably connected to the first driving source 6. The first link 4 can be connected to the first nut 63 of the first driving source 6 by the third hinge H3. The first link 4 can be connected to the third hinge H3 and can rotate around the third hinge H3.

The second link 5 can be rotatably connected to the second driving source 7. The second link 5 can be connected to the second nut 73 of the second driving source 7 by the fourth hinge H4. The second link 5 can be connected to the fourth hinge H4 and can be rotated around the fourth hinge H4.

The first link 4 and the second link 5 can be positioned at the front of the display module 1 and can be arranged to be inclined at a predetermined angle with respect to the front and rear direction X.

The first link 4 and the second link 5 can gradually get closer as they move forward.

The first driving source 6 can be placed on a fixed frame 9.

The first driving source 6 may comprise a first screw 62, a first nut 63, and a first rotation mechanism.

The first screw 62 can move the first nut 63 linearly.

The first screw 62 can be arranged to be inclined at a predetermined angle with respect to the front and rear direction X.

The first nut 63 can surround a portion of the first screw 62 and can move in the longitudinal direction of the first screw 62 along the first screw 62 when the first screw 62 rotates.

The first link 4 can be rotatably connected to the first nut 63.

The first rotation mechanism can rotate the first screw 62.

An example of a first rotation mechanism may comprise a first motor 64 connected to a first screw 62.

Another example of the first rotation mechanism may comprise a first motor 64, a first screw 62, and a first gear box 65 connected to the first motor 64. The first gear box 65 may include a drive gear 66 connected to the rotational shaft of the first motor 64, and a driven gear 67 meshed with the drive gear and connected to the first screw 62. The first motor 64 may be disposed above the first gear box 65.

The second driving source 7 can be placed on the fixed frame 9.

The second driving source 7 can be arranged spaced apart from the first driving source 7 in the left and right direction Y.

The second driving source 7 may comprise a second screw 72, a second nut 73, and a second rotation mechanism.

The second screw 72 can move the second nut 73 linearly.

The second screw 72 can be arranged to be inclined at a predetermined angle with respect to the front and rear direction X.

The second screw 72 can be spaced apart from the first screw 62 in the left and right direction Y.

The second screw 72 can be arranged symmetrically with the first screw 62.

The first screw 62 and the second screw 72 can gradually get closer as they move forward.

The second nut 73 can surround a portion of the second screw 72 and can move in the longitudinal direction of the second screw 72 along the second screw 72 when the second screw 72 rotates.

The second link 5 can be rotatably connected to the second nut 73.

The second rotation mechanism can rotate the second screw 72.

An example of a second rotation mechanism may comprise a second motor 74 connected to a second screw 72.

Another example of a second rotation mechanism may comprise a second motor 74, a second screw 72, and a second gear box 75 connected to the second motor 74. The second gear box 75 may include a drive gear 76 connected to the rotational shaft of the second motor 74, and a driven gear 77 meshed with the drive gear 76 and connected to the second screw 72. The second motor 74 may be disposed above the second gear box 75.

The guide pin 8 can be guided to the fixed frame 9 when the moving frame 2 is operated by the first driving source 6 or the second driving source 7.

The guide pin 8 can be integrally protruded from the moving frame 2, or can be manufactured separately from the moving frame 2 and then fixed to the moving frame 2.

The guide pin 8 can pass through the pin through-hole formed in the moving frame 2.

The guide pin 8 can extend downwardly to the moving frame 2 and pass through the fixed frame 9 in the up and down direction Z.

The shape of the guide pin 8 may be a circular rod shape or a roller shape to minimize friction.

The display device for a vehicle may further comprise a roller 82.

The roller 82 can be rotatably arranged on the guide pin 8. The roller 82 can be mounted on a portion of the guide pin 8 that extends downwardly through the fixed frame 9 and through the fixed frame 9. The roller 82 can be positioned on the lower side of the bottom surface of the fixed frame 9.

The fixed frame 9 can be placed in the cockpit or instrument panel of the vehicle. The fixed frame 9 can be placed inside the cockpit or instrument panel of the vehicle.

The fixed frame 9 can be mounted on the cockpit or instrument panel of the vehicle and can be fixed in position.

At least one fastening portion 91 can be formed on the fixed frame 9.

The fastening portion 91 can be fastened to the cockpit or instrument panel of the vehicle using a fastening member such as a screw.

A guide path that guides the guide pin 8 can be formed in the fixed frame 9.

The guide path can be formed to penetrate the fixed frame 9 in the up and down direction Z.

Referring to FIG. 4, the guide path may comprise a swivel path S in which the guide pin 8 is guided around the swivel virtual axis V; and a linear path L connected to the swivel path S and in which the guide pin 8 is linearly guided.

The first motor 64 of the first rotation mechanism and the second motor 74 of the second rotation mechanism can make the travel distance of the first nut 63 different from the travel distance of the second nut 73 or make the travel speed of the first nut 63 different from the travel speed of the second nut 73 so that the guide pin 8 is guided along the swivel path S.

The first motor 64 of the first rotation mechanism and the second motor 74 of the second rotation mechanism can make the travel distance of the first nut 63 and the travel distance of the second nut 73 the same and the travel speed of the first nut 63 and the travel speed of the second nut 73 the same so that the guide pin 8 is guided along the linear path L.

The swivel path S may comprise an outer path OS.

The outer path OS can be connected to the linear path L.

The swivel path S may comprise a first swivel path S1 and a second swivel path S2.

The first swivel path S1 and the second swivel path S2 can form an outer path OS.

The first swivel path S1 can guide the guide pin 8 to swivel around the first swivel virtual axis V1.

The first swivel path S1 may be arc-shaped. The first swivel path S1 may be convex in the opposite direction to the second swivel path S2.

The first swivel virtual axis V1 may be a virtual axis located on the left portion of the display module 2, as illustrated in FIG. 2, and the guide pin 8 may be guided along an arc-shaped trajectory with the first swivel virtual axis V1 as the center of curvature.

The second swivel path S2 can be connected to the first swivel path S1.

The second swivel path S2 can be connected to the first swivel path S1 by a connection path.

The guide pin 8 guided along the first swivel path S1 can be moved to the second swivel path S2 through the connection path, and the guide pin 8 guided along the second swivel path S2 can be moved to the first swivel path S1 through the connection path.

The second swivel path S2 can guide the guide pin 8 to swivel around the second swivel virtual axis V2.

The second swivel path S2 may be arc-shaped. The second swivel path S2 may be convex in the opposite direction to the first swivel path S1.

The second swivel virtual axis V2 may be a virtual axis located on the right portion of the display module 2, as illustrated in FIG. 2, and the guide pin 8 may be guided along an arc-shaped trajectory with the second swivel virtual axis V2 as the center of curvature.

The linear path L can be connected to the connection path of the first swivel path S1 and the second swivel path S2.

The linear path L can be formed long in the front and rear direction X.

The linear path L can be formed long in the direction toward the vehicle interior (that is, rear direction) from the connection path of the first swivel path S1 and the second swivel path S2.

A guide pin 8 located in a connection path of the first swivel path S1 and the second swivel path S2 can be guided in the front and rear direction X along the linear path L. The guide pin 8 guided along the linear path L can enter the connection path of the first swivel path S1 and the second swivel path S2.

The guide path may further comprise an inner path IS.

The inner path IS can be connected to the linear path L.

The inner path IS can be formed at the inner side of the outer path OS and spaced apart from the outer path OS.

The size of the inner path IS can be smaller than the size of the outer path OS.

The swivel path S may further comprise a third swivel path S3 and a fourth swivel path S4.

The third swivel path S3 and the fourth swivel path S4 can form an inner path IG.

The third swivel path S3 can guide the guide pin 8 to swivel around the third swivel virtual axis V3.

The third swivel path S3 may be arc-shaped. The third swivel path S3 may be convex in the opposite direction to the fourth swivel path S4.

The curvature of the third swivel path S3 may be smaller than the curvature of the first swivel path S1.

The third swivel virtual axis V3 may be a virtual axis located at the rear of the left side of the display module 2, as illustrated in FIG. 2, and the guide pin 8 may be guided along an arc-shaped trajectory with the third swivel virtual axis V3 as the center of curvature.

The fourth swivel path S4 can be connected to the third swivel path S3.

The fourth swivel path S4 can be connected to the third swivel path S3 and the connection path.

The guide pin 8 guided to the third swivel path S3 can be moved to the fourth swivel path S4 through the connection path, and the guide pin 8 guided to the fourth swivel path S4 can be moved to the third swivel path S3 through the connection path.

The fourth swivel path S4 can guide the guide pin 8 to swivel around the fourth swivel virtual axis V4.

The fourth swivel path S4 can guide the guide pin 8 to swivel around the fourth swivel virtual axis V4.

The fourth swivel path S4 may be arc-shaped. The fourth swivel path S4 may be convex in the opposite direction to the third swivel path S3.

The curvature of the fourth swivel path S4 may be smaller than the curvature of the second swivel path S2.

The fourth swivel virtual axis V4 may be a virtual axis located at the rear of the right side of the display module 2, as illustrated in FIG. 2, and the guide pin 8 may be guided along an arcuate trajectory with the fourth swivel virtual axis V4 as the center of curvature.

The linear path L can be connected to the connection paths of the third swivel path L3 and the fourth swivel path L4.

The linear path L can be formed long in the opposite direction of the vehicle interior (that is, front direction) from the connection path of the third swivel path S3 and the fourth swivel path S4.

The guide pin 8 located in the connection path of the third swivel path S3 and the fourth swivel path S4 can be guided in the front and rear direction X along the linear path L. The guide pin 8 guided along the linear path L can enter the connection path of the third swivel path S3 and the fourth swivel path S4.

One end of the linear path L can be connected to a connection path of the first swivel path S1 and the second swivel path S2. The other end of the linear path L can be connected to a connection path of the third swivel path S3 and the fourth swivel path S4.

The front end of the linear path L can be connected to the connection paths of the first swivel path S1 and the second swivel path S2, and the rear end of the linear path L can be connected to the connection paths of the third swivel path S3 and the fourth swivel path S4.

The length of the third swivel path S3 may be shorter than the length of the first swivel path S1.

The length of the fourth swivel path S4 may be shorter than the length of the second swivel path S2.

The distance L1 between the rear end of the third swivel path S3 and the rear end of the fourth swivel path S4 may be shorter than the distance L2 between the rear end of the first swivel path S1 and the rear end of the second swivel path S2.

The display device for a vehicle may further comprise a display frame 10.

The display frame 10 can form the outer appearance of the rear surface of a display device for a vehicle.

A portion of the display frame 10 may be exposed to the vehicle interior.

A through-hole through which a moving frame 2 passes may be formed in the display frame 10.

The display frame 10 can have an open rear surface.

The display frame 10 may include a front body and an edge protruding rearward from the front body. The display frame 10 may be fixed to a cockpit or instrument panel of a vehicle. The display frame 10 may be formed integrally with the fixed frame 9 or may be fastened to a fixed frame 9 manufactured separately from the fixed frame 9.

A space can be formed inside the display frame 10, and the display module 1 can be inserted into the space and accommodated in the space. When the display module 1 is swiveled, some areas can be pulled out of the space, and the remaining areas can be accommodated in the space.

A groove or hole may be formed inside the display frame 10 to avoid interference with the display panel 1 when the display panel 1 is tilted sharply.

The grooves or holes can be formed on the left and right sides of the display frame 10, respectively.

When the display panel 1 is swiveled sharply to the left, the left end of the display panel 1 can be accommodated in a groove or hole formed on the left side of the display frame 10.

When the display panel 1 is swiveled sharply to the right, the right end of the display panel 1 can be accommodated in a groove or hole formed on the right side of the display frame 10.

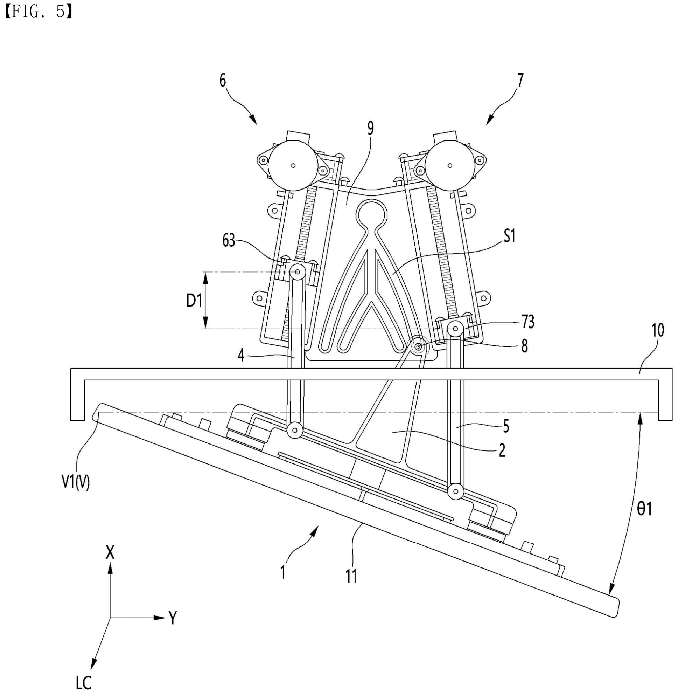

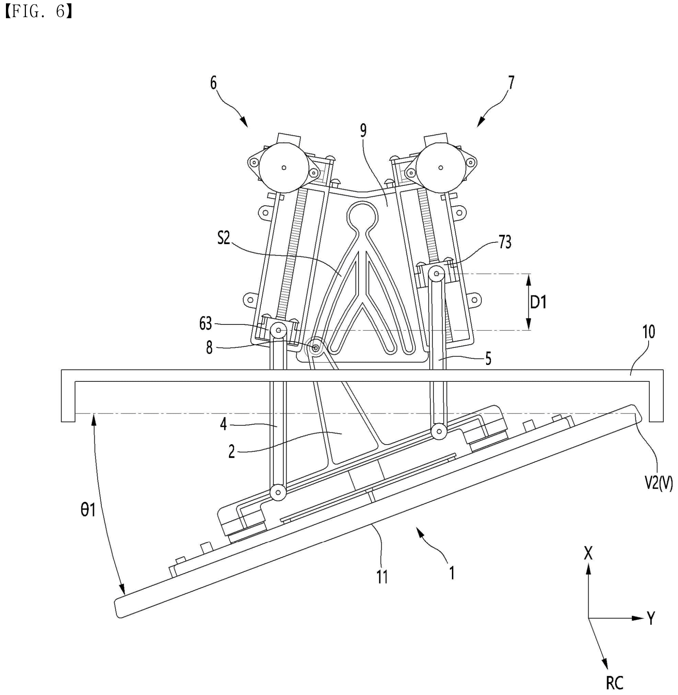

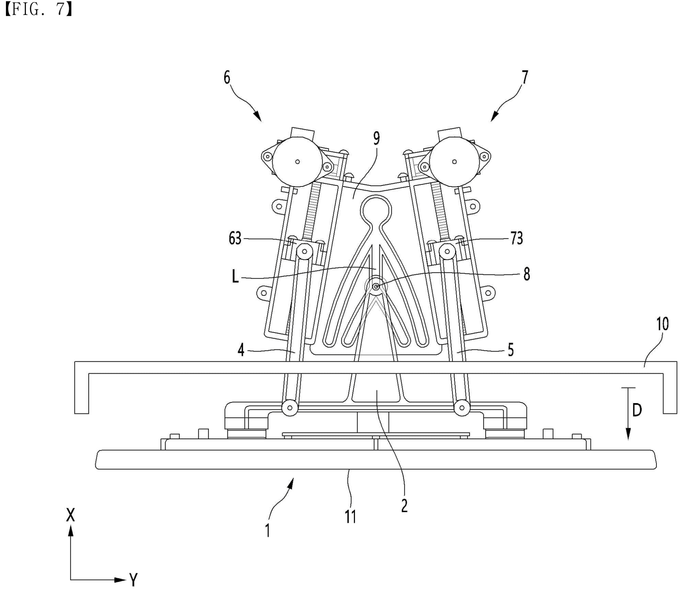

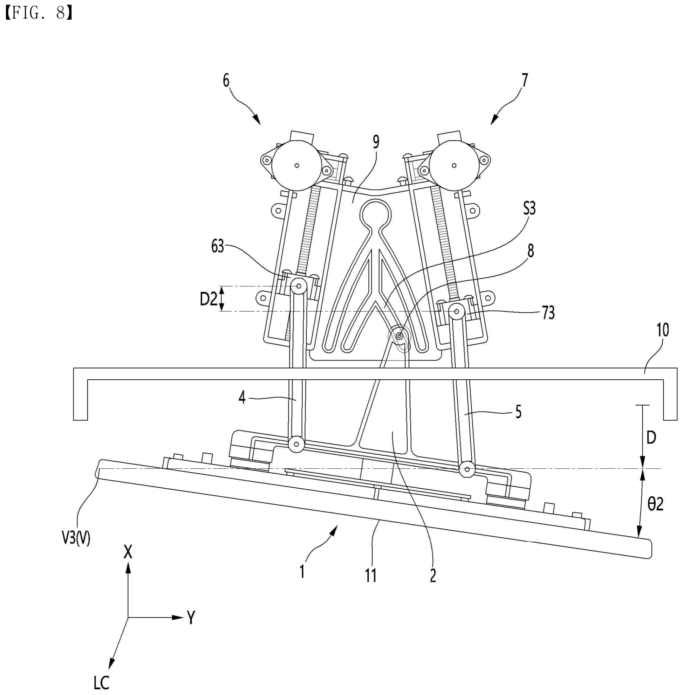

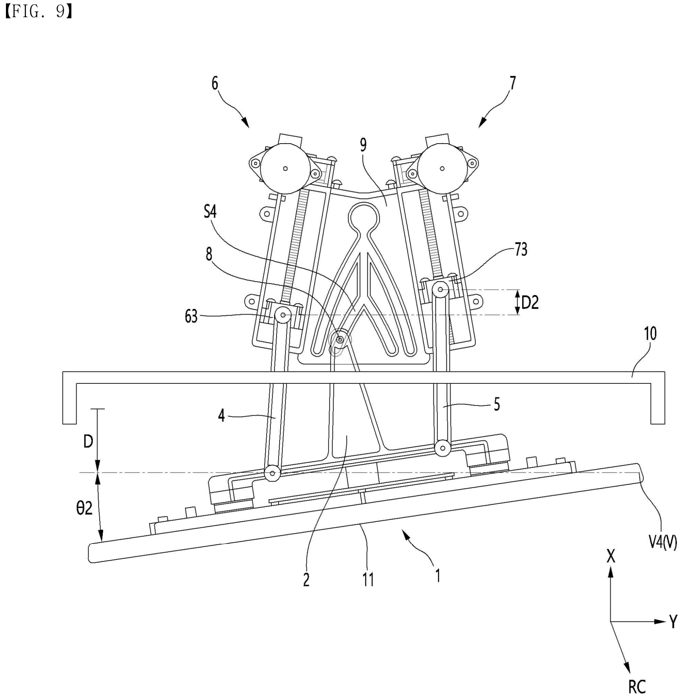

FIG. 5 is a view illustrating when the moving frame illustrated in FIG. 1 is swiveled around the first swivel virtual axis; FIG. 6 is a view illustrating when the moving frame illustrated in FIG. 1 is swiveled around the second swivel virtual axis; FIG. 7 is a view illustrating when the moving frame illustrated in FIG. 1 is moved toward the passenger; FIG. 8 is a view illustrating when the moving frame illustrated in FIG. 1 is moved toward the passenger and then swivels around the third swivel virtual axis; and FIG. 9 is a view illustrating when the moving frame illustrated in FIG. 1 has moved toward the passenger and then swivels around the fourth swivel virtual axis;
The display module 1 can be operated in a first swivel mode in which the guide pin 8 is guided along the first swivel path S1, as illustrated in FIG. 5.

The first swivel mode may be a left swing mode in which the display module 1 swivels to the left around the first swivel virtual axis V1.

In the first swivel mode, the display module 1 can be swiveled by a first angle θ1 in the left inclined direction LC around the first swivel virtual axis V1.

An example of the first angle θ1 can be 20°.

The display module 1 can be operated in a second swivel mode in which the guide pin 8 is guided along the second swivel path S2, as illustrated in FIG. 6.

The second swivel mode may be a right swing mode in which the display module 1 swivels to the right around the second swivel virtual axis V2.

In the second swivel mode, the display module 1 can be swiveled by a first angle θ1 in the right inclined direction RC around the second swivel virtual axis V2.

An example of the first angle θ1 can be 20°.

The display module 1 can be operated in a telescopic mode in which the guide pin 8 is guided along a linear path L, as illustrated in FIG. 7.

Telescopic mode may be a mode in which the display module 1 moves in the front and rear direction X toward the passenger.

In telescopic mode, the display module 1 can be retracted by the length of the linear path L relative to the reference position.

The display module 1 can be operated in a third swivel mode in which the guide pin 8 is guided along the third swivel path S3, as illustrated in FIG. 8.

The third swivel mode may be a telescopic left swing mode in which the display module 1 moves toward the passenger and swivels to the left around the third swivel virtual axis V3.

In the third swivel mode, the display module 1 can be retracted by the length of the linear path L based on the reference position, and then swivel by a second angle θ2 in the left inclined direction LC around the third swivel virtual axis V3.

The second angle θ2 can be smaller than the first angle θ1, and an example of the second angle θ2 can be 15°.

The display module 1 can be operated in a fourth swivel mode in which the guide pin 8 is guided along the fourth swivel path S4, as illustrated in FIG. 9.

The fourth swivel mode may be a telescopic right swing mode in which the display module 1 moves toward the passenger and swivels to the right around the fourth swivel virtual axis V4.

In the fourth swivel mode, the display module 1 can be retracted by the length of the linear path L based on the reference position, and then swivel by a second angle θ2 in the right inclined direction RC around the fourth swivel virtual axis V4.

The second angle θ2 can be smaller than the first angle θ1, and an example of the second angle θ2 can be 15°.

The display module 1 can be operated in one of a first swivel mode, a second swivel mode, a telescopic mode, a third swivel mode, and a fourth swivel mode.

The display module 1 can be swiveled to be inclined at a first angle θ1 in the first swivel mode or the second swivel mode.

The display module 1 can be swiveled to be inclined at a second angle θ2 that is gentler than the first angle θ1 in the third or fourth swivel mode.

The display module 1 can be tilted more gently as the difference between the movement distance of the first nut 63 and the movement distance of the second nut 73 becomes smaller.

In the first or second swivel mode, the first difference D1 (see FIGS. 5 and 6) between the maximum movement distance of the first nut 63 and the maximum movement distance of the second nut 73 may be greater than the second difference D2 (see FIGS. 8 and 9) between the maximum movement distance of the first nut 63 and the maximum movement distance of the second nut 73 in the third or fourth swivel mode.

Meanwhile, the second angle θ2 can be changed in response to an angle change request signal.

The processor can transmit an angle change request signal to the display device for a vehicle according to input from a passenger, or the like, and the first rotation mechanism or the second rotation mechanism can change the second angle θ2 according to the angle change request signal.

If the movement amount of either the first nut 72 or the second nut 73 changes, the second angle θ2 can change.

For example, as illustrated in FIG. 8, when the display panel 1 is swiveled to the left, the first rotation mechanism can move the first nut 63 in the front direction, and the second difference D2 between the maximum movement distance of the first nut 63 and the maximum movement distance of the second nut 73 can be increased, and the second angle θ2 can be increased.

As illustrated in FIG. 8, when the display panel 1 is swiveled to the left, the second rotation mechanism can move the second nut 73 in the rear direction, and the second difference D2 between the maximum movement distance of the first nut 63 and the maximum movement distance of the second nut 73 can be increased, and the second angle θ2 can be increased.

As illustrated in FIG. 9, when the display panel 1 is swiveled to the right, the first rotation mechanism can move the first nut 63 in the rear direction, and the second difference D2 between the maximum movement distance of the first nut 63 and the maximum movement distance of the second nut 73 can be reduced, and the second angle θ2 can be increased.

As illustrated in FIG. 9, when the display panel 1 is swiveled to the right, the second rotation mechanism can move the second nut 73 in the front direction, and the second difference D2 between the maximum movement distance of the first nut 63 and the maximum movement distance of the second nut 73 can be increased, and the second angle θ2 can be increased.

The second angle θ2 is smaller than the first angle θ1, but can be changed in multiple stages.

For example, when the first angle θ1 is 20°, the second angle θ1 can be 15°, 16°, 17°, 18°, or 19° within a range of 15° to 19°.

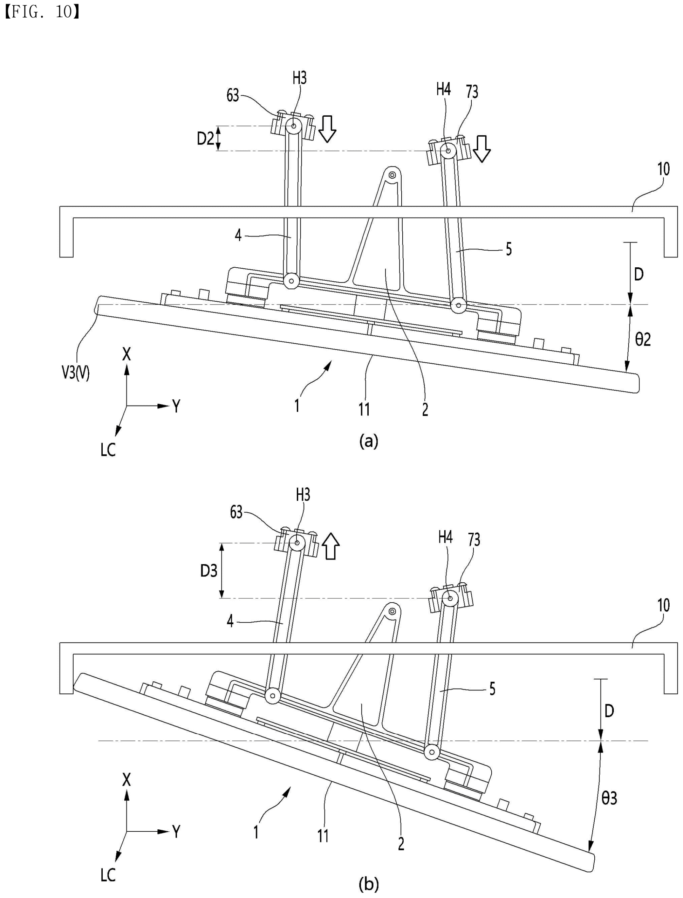

FIG. 10 is a view illustrating a process in which a moving frame of another example of a display device for a vehicle according to the present embodiment moves toward a passenger and then swivels to the left.

FIG. 10 illustrates an example in which, in the third swivel mode, the display module 1 swivels to be inclined at a third angle θ3 that is steeper than the first angle θ1.

FIG. 10 (a) is a schematic diagram illustrating when the moving frame 2 is moved toward the passenger and then swiveled to the left around the third swivel virtual axis V3, and is an example of when the display module 1 is swiveled to be inclined at a second angle θ2.

FIG. 10 (b) is a schematic diagram illustrating when the moving frame 2 illustrated in FIG. 10 (a) is swiveled to a third angle θ3 greater than the first angle θ1, and in which an example of when the display module 1 is swiveled to be inclined to an angle of the third angle θ3 is illustrated.

An example of the first angle θ1 may be 20°, an example of the second angle θ2 may be 15°, and an example of the third angle θ3 may be 30°.

The first rotation mechanism can rotate the first screw 62 in one direction so that the first nut 63 moves toward the passenger, and then rotate the first screw 62 in the other direction opposite to the one direction so that the first nut 63 moves away from the passenger. In the third swivel mode, the first rotation mechanism can rotate the first screw 62 in one direction so that the first nut 63 moves toward the passenger, and then rotate the first screw 62 in the other direction opposite to the one direction so that the first nut 63 moves away from the passenger.

In the third swivel mode, the first nut 63 can be moved in a direction closer to the passenger (for example, in a rear direction) as illustrated in FIG. 10 (a), and then moved in a direction away from the passenger (for example, front direction) as illustrated in FIG. 10 (b).

In the third swivel mode, the second nut 73 can be moved in a direction closer to the passenger (for example, rear direction).

The third swivel mode may include the first mode, the second mode, and the third mode.

Mode 1, Mode 2 and Mode 3 can be implemented sequentially.

In the first mode, the movement amount of the first nut 63 and the movement amount of the second nut 63 can be the same, and the display module 1 can move as in the telescopic mode.

In the second mode, the movement amount of the first nut 63 may be less than the movement amount of the second nut 73, the maximum movement distance of the first nut 63 and the maximum movement distance of the second nut 73 may be the second difference D2, and the display module 1 may be inclined at a second angle θ2 as illustrated in FIG. 10 (a).

The third mode can be implemented after the second mode, and in the third mode, the first nut 63 can be moved in a direction away from the passenger (that is, front direction).

The third mode may be a mode in which the driving direction of the first motor 64 is different from that of the second mode. In the second mode, when the driving direction of the first motor 64 is clockwise, in the third mode, the driving direction of the first motor 64 may be counterclockwise.

When the first nut 63 moves in a direction away from the passenger (that is, front direction), the display module 1 can be inclined at a third angle θ3 as illustrated in FIG. 10 (b).

When the third mode is completed, the maximum movement distance of the first nut 63 and the maximum movement distance of the second nut 73 may be the third difference D3, and the third difference D3 may be greater than the second difference D2.

The third angle θ2 can be changed in response to an angle change request signal.

The processor can transmit an angle change request signal to the display device for a vehicle according to input from the passenger, or the like, and the first rotation mechanism or the second rotation mechanism can change the third angle θ2 according to the angle change request signal.

If the movement amount of either the first nut 72 or the second nut 73 changes, the third angle θ3 can change.

For example, as illustrated in FIG. 10, when the display panel 1 is swiveled to the left, the second rotation mechanism can move the second nut 73 in the front direction, and the third difference D3 of the maximum movement distance of the first nut 63 and the maximum movement distance of the second nut 73 can be reduced, and the third angle θ3 can be reduced.

The third angle θ2 is larger than the first angle θ1, but can be changed in multiple stages.

For example, when the first angle θ1 is 20°, the third angle θ1 can be within a range of 22° to 30°, such as 22°, 24°, 26°, 28°, or 30°.

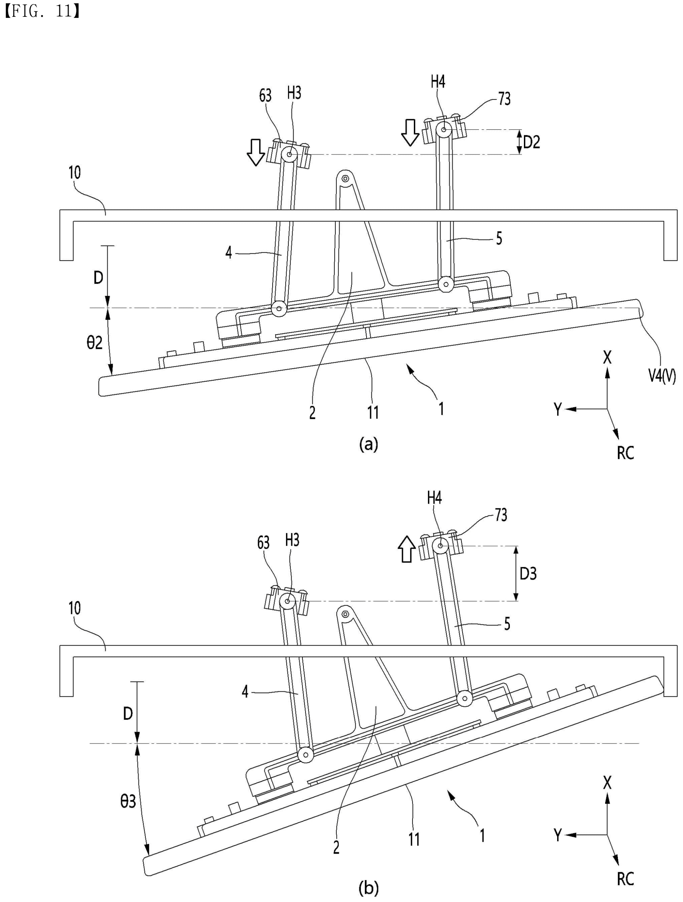

FIG. 11 is a view illustrating a process in which a moving frame of another example of a display device for a vehicle according to the present embodiment moves toward a passenger and then swivels to the right.

FIG. 11 shows an example in which, in the fourth swivel mode, the display module 1 is swiveled to be inclined at a third angle θ3 that is steeper than the first angle θ1.

FIG. 11 (a) is a schematic diagram illustrating when the moving frame 2 is moved toward the passenger and then swiveled to the right around the fourth swivel virtual axis V4, and in which an example of when the display module 1 is swiveled to be inclined to the third angle θ3 is illustrated.

FIG. 11 (b) is a schematic diagram illustrating when the moving frame 2 illustrated in FIG. 11 (a) is swiveled to a third angle θ3 greater than the first angle θ1, and in which an example of when the display module 1 is swiveled to be inclined to an angle of the third angle θ3 is illustrated.

An example of the first angle θ1 may be 20°, an example of the second angle θ2 may be 15°, and an example of the third angle θ3 may be 30°.

In the fourth swivel mode, the first nut 63 can be moved in a direction closer to the passenger (for example, rear direction).

The second rotation mechanism can rotate the second screw 72 in one direction so that the second nut 73 moves toward the passenger, and then rotate the second screw 72 in the other direction opposite to the one direction so that the second nut 73 moves away from the passenger.

The second rotation mechanism can rotate the second screw 72 in one direction so that the second nut 73 moves toward the passenger in the fourth swivel mode, and then rotate the second screw 72 in the other direction opposite to the one direction so that the second nut 73 moves away from the passenger.

In the fourth swivel mode, the second nut 73 can be moved in a direction closer to the passenger (for example, a rear direction) as illustrated in FIG. 11 (a), and then moved in a direction away from the passenger (for example, a front direction), as illustrated in FIG. 11 (b).

The fourth swivel mode may include the first mode, the second mode, and the third mode, like the third swivel mode.

Mode 1, Mode 2 and Mode 3 can be implemented sequentially.

In the first mode, the movement amount of the first nut 63 and the movement amount of the second nut 63 can be the same, and the display module 1 can move as in the telescopic mode.

In the second mode, the movement amount of the second nut 73 may be less than the movement amount of the first nut 63, the maximum movement distance of the first nut 63 and the maximum movement distance of the second nut 73 may be the second difference D2, and the display module 1 may be inclined at a second angle θ2, as illustrated in FIG. 11 (a).

The third mode can be implemented after the second mode, and in the third mode, the second nut 73 can be moved in a direction away from the passenger (that is, front direction).

The third mode may be a mode in which the driving direction of the second motor 74 is different from that of the second mode. In the second mode, when the driving direction of the second motor 74 is clockwise, in the third mode, the driving direction of the second motor 74 may be counterclockwise.

When the second nut 73 moves in a direction away from the passenger (that is, front direction), the display module 1 can be inclined at a third angle θ3 as illustrated in FIG. 11 (b).

When the third mode is completed, the maximum movement distance of the first nut 63 and the maximum movement distance of the second nut 73 may be the third difference D2, and the third difference D2 may be greater than the second difference D1.

For example, as illustrated in FIG. 11, when the display panel 1 is swiveled to the right, the first rotation mechanism can move the first nut 63 in the front direction, and the third difference D3 of the maximum movement distance of the first nut 63 and the maximum movement distance of the second nut 73 can be reduced, and the third angle θ3 can be reduced.

The third angle θ3 is larger than the first angle θ1, but can be changed in multiple stages.

For example, when the first angle θ1 is 20°, the third angle θ3 can be within a range of 22° to 30°, such as 22°, 24°, 26°, 28°, or 30°.

An example of the third swivel mode illustrated in FIG. 10 can be implemented instead of the third swivel mode illustrated in FIG. 8. An example of the fourth swivel mode illustrated in FIG. 11 can be implemented instead of the fourth swivel mode illustrated in FIG. 9. In other words, the display module 1 can be operated in one of the first swivel mode illustrated in FIG. 5, the second swivel mode illustrated in FIG. 6, the telescopic mode illustrated in FIG. 7, the third swivel mode illustrated in FIG. 10, and the fourth swivel mode illustrated in FIG. 11.

Another example of the third swivel mode illustrated in FIG. 10 may be the third swivel mode illustrated in FIG. 8 and the optionally implemented fifth swivel mode. Another example of the fourth swivel mode illustrated in FIG. 11 may be the fourth swivel mode illustrated in FIG. 9 and the optionally implemented sixth swivel mode. In other words, the display module 1 may be operated in one of the first swivel mode illustrated in FIG. 5, the second swivel mode illustrated in FIG. 6, the telescopic mode illustrated in FIG. 7, the third swivel mode illustrated in FIG. 8, the fourth swivel mode illustrated in FIG. 9, the fifth swivel mode illustrated in FIG. 10, and the sixth swivel mode illustrated in FIG. 11.

The above description is merely an example of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but to explain it, and the scope of the technical idea of the present disclosure is not limited by these embodiments.

The scope of protection of the present disclosure should be interpreted by the claims below, and all technical ideas within a scope equivalent thereto should be interpreted as being included in the scope of the rights of the present disclosure.

## Claims

1. A display device for a vehicle comprising:
a moving frame disposed on a display module;
a first link connected to the moving frame by a first hinge;
a second link connected to the moving frame by a second hinge;
a first driving source moving the first link;
a second driving source moving the second link;
a guide pin disposed in the moving frame; and
a fixed frame having a guide path formed along which the guide pin is guided,
wherein the guide path includes:
a swivel path along which the guide pin is guided around a swivel virtual axis; and
a linear path connected to the swivel path and along which the guide pin is linearly guided.

2. The display device for a vehicle of claim 1,
wherein the swivel path comprises:
an outer path connected to the linear path and
an inner path spaced apart from the outer path at an inner side of the outer path and connected to the linear path.

3. The display device for a vehicle of claim 1,
wherein the swivel path comprises:
a first swivel path guiding the guide pin around a first swivel virtual axis, and
a second swivel path connected to the first swivel path and guiding the guide pin around a second swivel virtual axis, and
wherein the linear path is connected to a connection path of the first swivel path and the second swivel path.

4. The display device for a vehicle of claim 3,
wherein the swivel path further comprises:
a third swivel path guiding the guide pin around a third swivel virtual axis, and
a fourth swivel path connected to the third swivel path and guiding the guide pin around a fourth swivel virtual axis, and
wherein the linear path is connected to a connection path of the third swivel path and the fourth swivel path.

5. The display device for a vehicle of claim 4,
wherein one end of the linear path is connected to the connection path of the first swivel path and the second swivel path, and
wherein the other end of the linear path is connected to a region of the connection path of the third swivel path and the fourth swivel path.

6. The display device for a vehicle of claim 4,
wherein a length of the third swivel path is shorter than a length of the first swivel path, and
wherein a length of the fourth swivel path is shorter than a length of the second swivel path.

7. The display device for a vehicle of claim 4,
wherein a distance between a rear end of the third guide path and a rear end of the fourth swivel path is shorter than a distance between a rear end of the first guide path and a rear end of the second swivel path.

8. The display device for a vehicle of claim 4,
wherein the display module is operated in one of the following modes:
a first swivel mode in which the guide pin is guided along the first swivel path;
a second swivel mode in which the guide pin is guided along the second swivel path;
a telescopic mode in which the guide pin is guided along the linear path;
a third swivel mode in which the guide pin is guided along the third swivel path; and
a fourth swivel mode in which the guide pin is guided along the fourth swivel path.

9. The display device for a vehicle of claim 8,
wherein, in the first swivel mode and the second swivel mode, the display module is swiveled to be inclined at a first angle, and
wherein, in the third swivel mode and the fourth swivel mode, the display module is swiveled to be inclined at a second angle smaller than the first angle.

10. The display device for a vehicle of claim 9,
wherein the second angle is changed in response to an angle change request signal.

11. The display device for a vehicle of claim 8,
wherein, in the first swivel mode and the second swivel mode, the display module is swiveled to be inclined at a first angle, and
wherein, in the third swivel mode and the fourth swivel mode, the display module is swiveled to be inclined at a third angle greater than the first angle.

12. The display device for a vehicle of claim 11,
wherein the third angle is changed in response to an angle change request signal.

13. The display device for a vehicle of claim 1,
wherein the first driving source comprises:
a first nut to which the first link is rotatably connected;
a first screw linearly moving the first nut; and
a first rotation mechanism rotating the first screw, and
wherein the second driving source includes:
a second nut to which the second link is rotatably connected;
a second screw linearly moving the second nut; and
a second rotation mechanism rotating the second screw, and
wherein the first rotation mechanism and the second rotation mechanism make a travel distance of the first nut and a travel distance of the second nut the same so that the guide pin is guided along the linear path.

14. The display device for a vehicle of claim 13,
wherein the first rotation mechanism rotates the first screw in one direction so that the first nut moves toward a passenger, and then rotates the first screw in the other direction opposite to the one direction so that the first nut moves away from the passenger.

15. The display device for a vehicle of claim 13,
wherein the second rotation mechanism rotates the second screw in one direction so that the second nut moves toward a passenger, and then rotates the second screw in the other direction opposite to the one direction so that the second nut moves away from the passenger.
